# DEMANDE DE BREVET EUROPEEN

(11) **EP 2 266 423 A1**
(43) Date de publication de la demande: **29.12.2010**
(21) Numéro de dépôt: 10350006.2
(22) Date de dépôt: 17.05.2010
(51) Int. Cl.: A23N 15/02, A23N 15/08, A01D 33/08

(54) **Procédé et moyens de parage de bulbes allongés**

(30) Priorité: 23.06.2009 FR 0903022
(71) Demandeur: Qualilegu, 44390 Petit-Mars (FR)
(72) Inventeur: Ducoin, Dominique, 44470 Carquefou (FR)
(74) Mandataire: Tournel, Jean Louis

(57) **Abrégé**

L'invention a pour objet un procédé de parage de bulbes allongés pourvues de leurs feuilles et racines selon lequel procédé :
- on alimente avec des bulbes un premier convoyeur (4) qui, saisissant les feuilles pour les tirer vers le bas, place l'axe du bulbe perpendiculaire a un plan de coupe,
- avant la fin du premier convoyeur (4) et au moyen d'un second convoyeur (5), on saisit le bulbe en le pinçant et on l'achemine vers un premier moyen (2A) de coupe,
- lors du transit vers le dit deuxième moyen (3A) de coupe, on introduit le bulbe dans un moyen (7) dit de déplacement vertical qui applique sur le pied du bulbe une force dirigée vers le bas pour faire glisser le dit bulbe vers le bas et positionner le pied du bulbe au niveau du deuxième plan de coupe,
- seulement après sa sortie du moyen (7) de déplacement, on engage le bulbe dans le second moyen (3A) de coupe destiné à séparer la racine émergeant du pied du bulbe et
- le bulbe est ensuite évacué.

## Description

Une partie importante des radis produits en France est vendue sous forme de bottes, les bulbes étant alors pourvus de leurs feuilles et de leurs racines.

Pour l'autre partie des radis, ceux-ci sont parés. Pour cela on coupe les feuilles au niveau du collet et on supprime la radicelle. Ces opérations se font souvent manuellement car comme toutes les plantes les dimensions des bulbes sont très variables. Cela est encore plus important pour les radis type demi-longs à bout blanc.

En effet, il existe des variétés de radis qui ont un bulbe globalement sphérique ( environ 30 à 35 mm de diamètre) et d'autres qui ont un bulbe globalement cylindrique ( 18 à 20 mm de diamètre pour une longueur de 50mm et plus). Pour les bulbes sphériques des solutions fonctionnent plus ou moins correctement. Pour les radis allongés, lors de la croissance, ils augmentent de section et de longueur. Si dans un lot, la section du bulbe varie très peu, la variation dans le sens de la longueur est plus importante.

Par contre les radis sphériques sont plus homogènes dans leurs dimensions et on peut donc déterminer une dimension moyenne.

Lors du parage d'un radis type allongé, cette variation dimensionnelle présente des difficultés. En effet, il faut limiter la perte de matière du bulbe et donc couper les feuilles au plus près du collet et pour la racine, au plus près de sa jonction avec le pied du bulbe.

Il est connu des machines qui, au moment de la récolte sectionnent la racine en prenant pour hypothèse que le pied des radis se situe à un niveau sensiblement constant par rapport à la surface de la culture. Les résultats sont décevants. Par ailleurs, il persiste les feuilles qui éventuellement doivent être supprimées par passage sur une seconde machine. On connait également des machines qui coupent les feuilles et laissent la racine. Un traitement de la racine doit être fait ensuite.

Compte tenu que les radis ronds sont globalement sphériques, il est plus simple de les parer avec une machine car la fourchette de dimensions est étroite ce qui n'est pas le cas des radis allongés. Souvent, pour les radis ronds, la mécanisation du parage exploite la particularité de pouvoir « rouler » comme une sphère ce qui n'est pas le cas du demi-long qui ne peut rouler que selon son axe longitudinal.

Les coupes du feuillage et de la racine nécessitent de positionner l'axe du radis sensiblement perpendiculairement au plan de coupe et ensuite d'ajuster la hauteur de coupe en fonction de la longueur.

Dans le cas des radis ronds, il y a peu de variations donc les couteaux peuvent être positionnés à un niveau déterminé qui tient compte de la taille moyenne du bulbe. Le radis rond peut alors être paré.

Cette solution ne peut convenir aux radis allongés car elle entrainerait des pertes de matière dans la mesure où la longueur du bulbe est très variable et on ne peut donc s'appuyer sur une longueur moyenne sauf à admettre des pertes de matière importantes.

On connait US 6 237 477 une machine qui pare des radis ronds déjà dépourvus de feuilles. Les bulbes encore pourvus de la racine alimentent deux vis sans fin disposées cote à cote qui saisissent la racine ( par effet du surpoids de la racine) et amène le bulbe vers un convoyeur formé de deux courroies délimitant un couloir. A l'entrée du couloir un couteau fixe coupe la racine.Le bulbe est alors acheminé vers un dispositif comprenant sous le bulbe une rampe inclinée vers le haut et sollicitée vers le haut par un ressort et au dessus du bulbe une ensemble de deux courroies inclinées symétriquement par rapport à la rampe de sorte à venir pincer le bulbe pour le maintenir le temps du passage sur une lame pour recouper le haut du bulbe avec un couteau fixe. Un tel procédé traite donc des radis ronds dépourvus de feuilles. Ce type de machine ne peut traiter des radis allongés car notamment lorsque le radis allongé atteindrait la rampe, il basculerait et se présenterait incorrectement devant le couteau. Egalement, ce procédé suppose que les bulbes arrivent sur la machine dépourvus de feuilles. On a donc une étape préalable de suppression des feuilles, une seconde étape de coupe de la racine puis une étape de recoupe en dessous du collet. Cette dernière étape est pénalisante car elle élimine de la matière comestible.

L'invention propose une solution pour sectionner les feuilles et racines de bulbes allongées et fait appel à un procédé de parage de bulbes allongés avec racine et feuilles conformeme à la revendication 1.

L'invention sera bien comprise à la lecture de la description ci après faite à titre d'exemple non limitatif en regard du dessin qui représente :

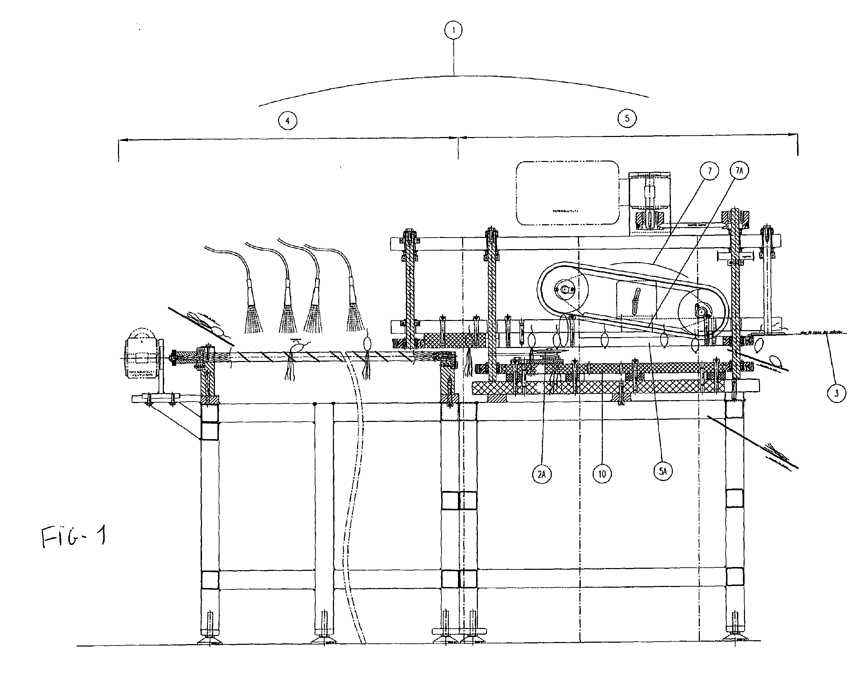

FIG 1 : Vue en coupe axiale verticale d'une machine de parage
FIG 2 : vue en coupe horizontale selon le deuxième plan de coupe de la machine de parage
FIG 3 : une coupe transversale verticale du premier convoyeur
FIG 4 : une coupe transversale verticale du second convoyeur avant le premier moyen de coupe

En se reportant au dessin, on voit une machine 1 pour parer des légumes 2 bulbeux allongés type radis demi-longs à bout blanc. Chaque radis qui doit être traité comprend un bulbe allongé, son feuillage et sa racine. Le collet se situe au niveau de la zone où émergent les feuilles et le pied du bulbe correspond à la zone ou apparait la racine.

Parfois la racine est raccourcie ou absente.

Préalablement au parage, les bulbes ont été récoltés et de préférence lavés.

Pour parer les bulbes en minimisant les pertes de matière :
On fixe un premier plan 2 de coupe destiné à la coupe des feuilles,
On fixe un deuxième plan 3 de coupe destiné à la coupe de la racine,
On alimente avec des bulbes un premier convoyeur 4 qui, saisissant les feuilles pour les tirer vers le bas, place l'axe du bulbe perpendiculaire a un plan de coupe, le dit convoyeur fournissant également un plan de référence parallèle au premier plan de coupe,
avant la fin du premier convoyeur 4 et au moyen d'un second convoyeur 5, on saisit le bulbe en le pinçant et on l'achemine vers un premier moyen 2A de coupe,
après la séparation des feuilles, on achemine le bulbe vers un second moyen 3A de coupe positionné au niveau du second plan de coupe et
lors du transit vers le dit deuxième moyen 3A de coupe, on introduit le bulbe dans un moyen 7 dit de déplacement qui applique sur le pied du bulbe une force dirigée vers le bas pour faire glisser le dit bulbe vers le bas et positionner le pied du bulbe au niveau du deuxième plan de coupe,
seulement après sa sortie du moyen 7 de déplacement, on engage le bulbe dans le second moyen 3A de coupe destiné à séparer la racine émergeant du pied du bulbe et
le bulbe est ensuite évacué.

Le bulbe ainsi paré est, par exemple, conduit vers un tapis convoyeur ou une goulotte pour être conditionné pour la vente.

La coupe des feuilles se fait au niveau du collet .Par niveau du collet, on comprendra la jonction entre les feuilles et le bulbe mais également un plan de coupe un peu au dessus de cette zone de jonction pour préserver un peu de feuilles pour la présentation et/ou la conservation.

Avantageusement, pendant le déplacement sur le deuxième convoyeur 5, on saisit les feuilles avant de les séparer du bulbe et on les conduit vers un moyen d'évacuation telle une goulotte d'évacuation. Les feuilles sont saisies avant le premier moyen 2A de coupe de sorte qu'elles sont tenues lors de la coupe au niveau du collet.

Le plan de référence du premier convoyeur est confondu avec le premier plan de coupe ou est parallèle.

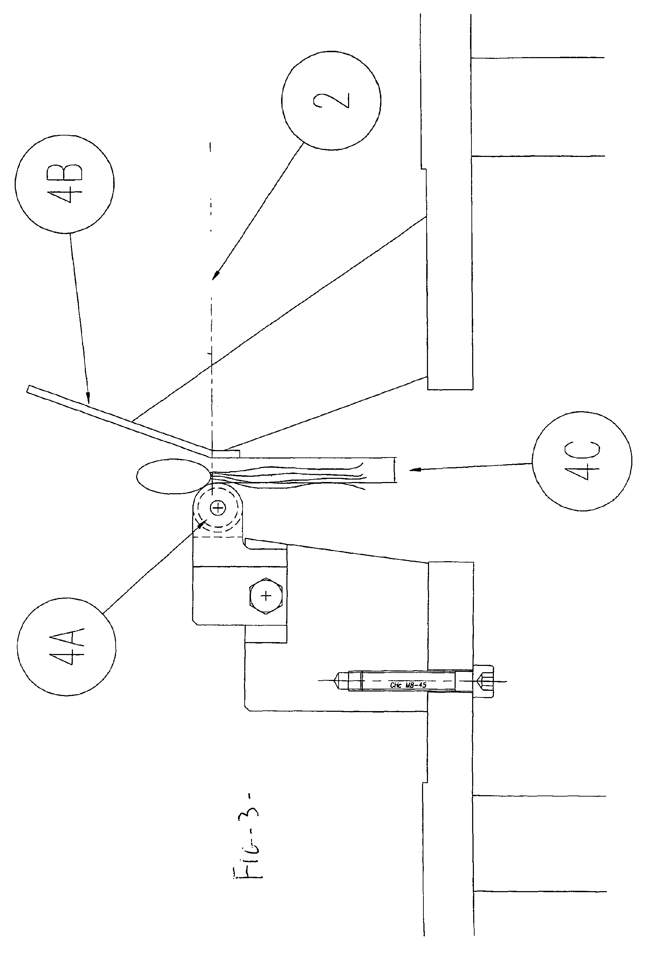

Le premier convoyeur 4 est alimenté régulièrement par le dessus. Le tubercule tombe sur le dit convoyeur qui de par sa forme allongée et la présence des feuilles va être orienté dans l'axe de déplacement du convoyeur. Le convoyeur va faire basculer le radis en entrainant les feuilles vers le bas de sorte que le pied du bulbe se retrouve vers le haut. En cette position le bulbe est en appui sur le convoyeur au niveau du collet (figure 3) donc, la position du collet est connue. Il sert en outre d'aligneur pour présenter un par un les radis au moyen 2A de coupe.

Accessoirement on peut prévoir un convoyeur dit de positionnement ( non représenté) en sortie du premier convoyeur, ce convoyeur de positionnement étant composé de deux courroies rapprochées ( par exemple 3 mm) qui vont permettent d'une part de mieux positionner le collet et d'autre part de mieux orienter l'axe longitudinal du radis par le poids des feuilles. Ce convoyeur va soutenir le radis exactement au niveau du collet.

Sur le deuxième convoyeur, après passage sur le premier moyen de coupe, on va positionner la base du radis (jonction entre le bulbe et la racine) à un niveau prédéterminé en appuyant sur la base du bulbe pour le faire descendre, l'extrémité basse du radis qui correspond au collet étant libre de descendre sans limite car sans obstacle à la descente.

Les moyens comprennent donc :
un premier convoyeur 4 conformé pour saisir les feuilles attachées au bulbe afin de basculer le radis pour que la racine soit dirigée vers le haut et placer le collet du bulbe dans un plan de référence parallèle au premier plan de coupe,
un second convoyeur 5 pour saisir le bulbe encore soutenu par le premier convoyeur et le déplacer vers des moyens 2A, 3A de coupe, sur le parcours dudit bulbe,
un premier moyen 2A de coupe destiné à séparer les feuilles du bulbe,
en aval de ce premier moyen de coupe, au dessus du second convoyeur 5 et en amont d'un deuxième moyen 3A de coupe destiné à la séparation de la racine, un moyen 7 de déplacement du pied du bulbe dans un plan confondu avec le plan 3 de coupe du deuxième moyen de coupe, par application d'une force sur le pied du bulbe,
en aval du moyen 7 de déplacement, le dit second moyen 3A de coupe destiné à séparer la racine émergeant du pied du bulbe et
un moyen d'évacuation du bulbe, par exemple vers un poste de triage avant un poste d'emballage.

On peut utiliser, par exemple, comme premier convoyeur un système constitué par une vis 4A sans fin coopérant avec un plan 4B incliné parallèle à la vis pour former une lumière 4C au travers de laquelle s'insèrent les feuilles. Cette vis 4A et ce plan 4B incliné forme deux surfaces d'appui pour le bulbe approximativement au niveau du collet lorsque les feuilles pendent sous le convoyeur et ces surfaces d'appui constituent un plan de référence pour le positionnement du collet.

On pourrait également utiliser deux vis sans fin tournant en sens inverses disposées pour former une lumière.

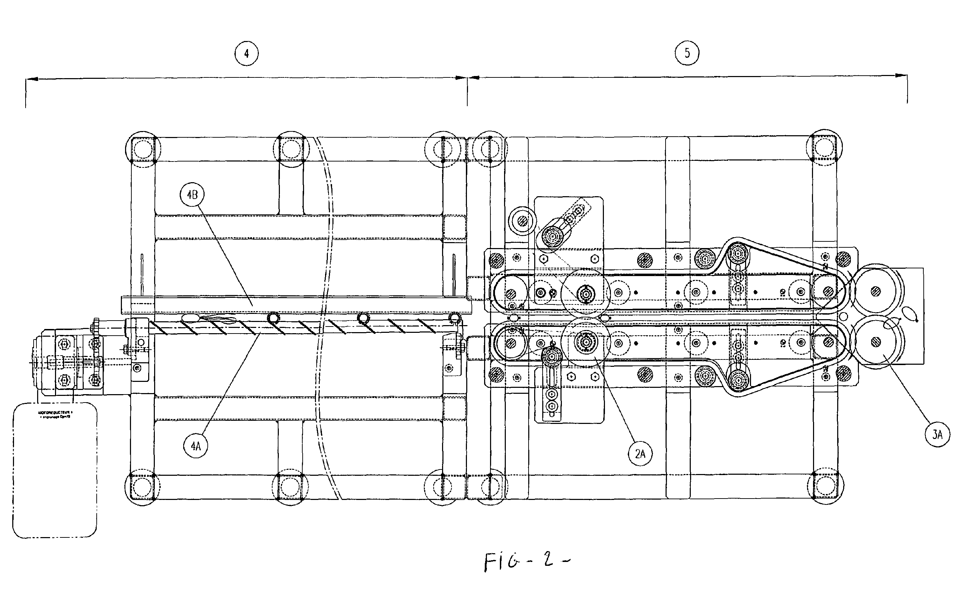

Les feuilles et la forme allongée du bulbe sont utilisées pour faire basculer la plante dans la position requise. En effet les feuilles sont happées par la vis pour traverser la lumière 4C et faire ainsi contrepoids pour positionner le bulbe sensiblement perpendiculairement au plan de référence. Le sens de rotation de la vis et l'orientation de la spire sont définis pour introduire ces feuilles dans la lumière et déplacer le bulbe vers l'aval. La figure 3 montre un radis ayant basculé. La figure 2 montre un radis avant basculement.

Des jets d'eau et/ou d'air assisteront la saisie des feuilles et le passage au travers de la lumière 4C en poussant sur les feuilles et orienteront l'axe longitudinal du radis pour le placer à la verticale. On voit que ces jets surplombent le convoyeur.

Avant d'atteindre le premier moyen 2A de coupe, on saisit les feuilles du tubercule et on accompagne le mouvement du tubercule au moins le temps de la coupe des feuilles. En effet lorsque l'on coupe les feuilles à distance du collet, il est préférable qu'elles soient maintenues sous peine de ne pas les couper en totalité surtout si le couteau est une lame fixe.

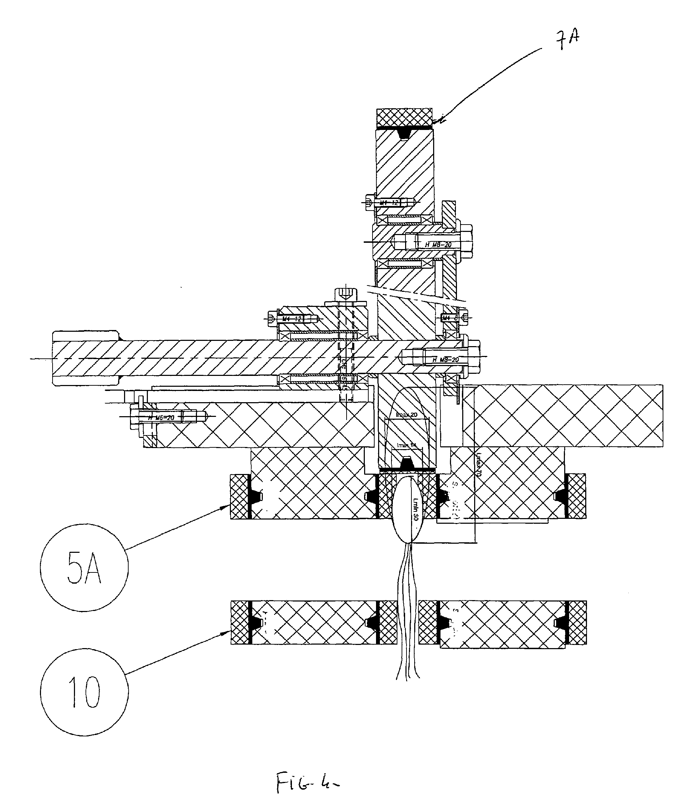

Le deuxième convoyeur 5 est constitué par deux courroies 5A sans fin qui délimitent un couloir dans lequel est pincé le tubercule. Pour être pincé, la largeur du couloir est inférieure à la section du bulbe. Le déplacement des brins menants (actifs) est synchronisé pour ne pas faire tourner le radis sur lui-même. Pour tenir compte de la variation de section des bulbes, les courroies sans fin utilisées comprennent une partie support souple faiblement compressible recouverte sur la face dirigée vers le couloir d'une couche épaisse compressible type mousse permettant les variations de section et le glissement du bulbe ( voir figure 4).

L'entrée dans ce deuxième convoyeur 5 se produit avant la sortie du premier convoyeur en sorte de saisir le bulbe lorsqu'il est encore positionné par rapport au plan de référence du premier convoyeur. Le premier plan de coupe sera confondu avec ce premier plan de référence ou légèrement décalé.

La trajectoire du second convoyeur sera de préférence parallèle à la trajectoire du premier convoyeur.

Un troisième convoyeur 10 formé par deux courroies en regard l'une de l'autre pince les feuilles avant que le bulbe atteigne le premier moyen de coupe et ne libère les dites feuilles qu'en aval du moyen de coupe précité (figure 4).

Lors de son déplacement linéaire, le bulbe va être positionné par le premier convoyeur 4 en sorte de placer le collet dans un plan de référence connu par rapport à un premier plan de coupe pour être présenté au dit premier moyen de coupe, ici deux lames rotatives se superposant partiellement vont couper les feuilles sensiblement au niveau du collet. Pour être coupé, le bulbe doit être pincé pour éviter qu'il ne bascule pas.

En aval de ce premier moyen 2A de coupe, on va venir positionner le pied du bulbe pour couper la racine en appuyant sur le pied du bulbe lors de son déplacement vers le second moyen de coupe afin de faire glisser le bulbe entre les courroies du deuxième convoyeur. Il est donc important que les courroies pinçant le bulbe soient recouvertes d'une couche de mousse pour s'adapter à la section du bulbe et permettre un glissement selon son axe longitudinal sans altérer sa surface extérieure et sans modification de son orientation.

Pour appuyer sur le pied du radis, on utilise une seule courroie 7A sans fin dite courroie de pression placée au dessus de la trajectoire des radis et dont le brin actif se déplace à la même vitesse que les brins du deuxième convoyeur. Le brin actif de cette courroie sans fin 7A est incliné par rapport à l'axe de déplacement des radis et se rapproche du pied du radis qu'il pousse vers le bas en progressant vers l'aval. Cette courroie de pression circule sur deux poulies de renvoie dont une est motorisée. La tangente horizontale de la courroie sur la deuxième poulie ( placée en fin de parcours) définit le plan de coupe.

On peut également utiliser un poussoir (non représenté) qui peut soit agir lorsque le deuxième convoyeur est stoppé soit ce poussoir est animé d'un mouvement vers le bas et d'un mouvement vers l'aval.

Il n'y a pas de butée limitant le déplacement du radis vers le bas.

Le deuxième moyen 3A de coupe composé de deux lames rotatives est disposé nécessairement après le dispositif de déplacement afin que la coupe se produise exactement au niveau de la zone d'appui de cette courroie. Cette solution permet de couper juste au niveau du pied du bulbe.

L'utilisation de couteaux rotatifs est conseillée par rapport à une lame fixe.

Ainsi, on arrive à parer correctement des radis allongés en minimisant les pertes de matières et même en préservant une longueur de feuilles.

## Revendications

1. Procédé de parage de bulbes allongés pourvues de leurs feuilles et racines selon lequel procédé :
- on fixe un premier plan (2) de coupe destiné à la coupe des feuilles,
- on fixe un deuxième plan (3) de coupe destiné à la coupe de la racine,
- on alimente avec des bulbes un premier convoyeur (4) qui, saisissant les feuilles pour les tirer vers le bas, place l'axe du bulbe perpendiculaire a un plan de coupe, le dit convoyeur fournissant également un plan de référence parallèle au premier plan de coupe,
- avant la fin du premier convoyeur (4) et au moyen d'un second convoyeur (5), on saisit le bulbe en le pinçant et on l'achemine vers un premier moyen (2A) de coupe,
- après la séparation des feuilles, on achemine le bulbe vers un second moyen (3A) de coupe positionné au niveau du second plan de coupe et
- lors du transit vers le dit deuxième moyen (3A) de coupe, on introduit le bulbe dans un moyen (7) dit de déplacement vertical qui applique sur le pied du bulbe une force dirigée vers le bas pour faire glisser le dit bulbe vers le bas et positionner le pied du bulbe au niveau du deuxième plan de coupe,
- seulement après sa sortie du moyen (7) de déplacement, on engage le bulbe dans le second moyen (3A) de coupe destiné à séparer la racine émergeant du pied du bulbe et
- le bulbe est ensuite évacué.

2. Procédé de parage de bulbes allongés selon la revendication 1 **caractérisé en ce qu'**avant d'atteindre le premier moyen de coupe, on saisit les feuilles et on accompagne le déplacement du bulbe.

3. Procédé de parage de bulbes allongés selon la revendication 1 ou 2 **caractérisée en ce qu'**on assiste la saisie des feuilles par des jets d'air ou d'eau et on oriente ainsi l'axe longitudinal du bulbe à la verticale.

4. Moyens pour la mise en oeuvre du procédé selon l'une quelconque des revendications 1 à 3 **caractérisé en ce que** les moyens comprennent :
- un premier convoyeur (4 ) conformé pour saisir les feuilles attachées au bulbe afin de basculer le bulbe pour que la racine soit dirigée vers le haut et placer le collet du bulbe dans un plan de référence parallèle au premier plan de coupe,
- un second convoyeur (5) pour saisir le bulbe encore porté par le premier convoyeur et le déplacer vers des moyens (2A, 3A) de coupe, sur le parcours dudit bulbe,
- un premier moyen (2A) de coupe destiné à séparer les feuilles du bulbe,
- en aval de ce premier moyen de coupe, au dessus du second convoyeur (5) et en amont d'un deuxième moyen (3A) de coupe destiné à la séparation de la racine, un moyen (7) de déplacement vertical du pied du bulbe dans un plan confondu avec le plan de coupe du deuxième moyen de coupe, par application d'une force sur le pied du bulbe,
- en aval du moyen (7) de déplacement, le dit second moyen (3A) de coupe destiné à séparer la racine émergeant du pied du bulbe et
- un moyen d'évacuation du bulbe.

5. Moyens selon la revendication 4 **caractérisés en ce que** le premier convoyeur (4) est constitué par une vis (4A) sans fin coopérant avec un plan (4B) incliné parallèle à la vis pour former une lumière (4C) au travers de laquelle s'insèrent les feuilles.

6. Moyens selon la revendication 4 **caractérisés en ce que** le premier convoyeur (4) est constitué par deux vis sans fin disposées pour former une lumière.

7. Moyens selon la revendication 4 ou 5 ou 6 **caractérisés en ce que** le deuxième convoyeur est constitué de deux courroies (5A) sans fin délimitant un couloir, les dites courroies comportant une couche de mousse.

8. Moyens selon la revendication 4 ou 5 ou 6 ou 7 **caractérisés en ce que** le moyen de déplacement vertical comprend une seule courroie (7A) sans fin dite courroie de pression placée au dessus de la trajectoire des bulbes et dont le brin actif se déplace à la même vitesse que les brins du deuxième convoyeur, le dit brin actif de cette courroie sans fin (7A) étant incliné par rapport à l'axe de déplacement des bulbes et se rapprochant du pied du bulbe qu'il pousse vers le bas en progressant vers l'aval.

9. Moyens selon l'une quelconque des revendications 4 à 8 **caractérisé en ce qu'**il comprend un troisième convoyeur (10) formé par deux courroies en regard l'une de l'autre pince les feuilles avant que le bulbe atteigne le premier moyen de coupe et ne libère les dites feuilles qu'en aval du moyen de coupe précité.

10. Moyens selon l'une quelconque des revendications 4 à 6 **caractérisé en ce qu'**ils comprennent des jets d'eau et/ou d'air surplombant le premier convoyeur pour pousser les feuilles vers le bas.

## Revendications modifiées

### Revendications modifiées conformément à la règle 137(2) CBE.

**1.** Procédé de parage de bulbes allongés pourvus de leurs feuilles et racines selon lequel procédé :
- on fixe un premier plan (2) de coupe destiné à la coupe des feuilles,
- on fixe un deuxième plan (3) de coupe destiné à la coupe de la racine,
- on alimente avec des bulbes un premier convoyeur (4) qui, saisissant les feuilles pour les tirer vers le bas, place l'axe du bulbe perpendiculaire a un plan de coupe, le dit convoyeur fournissant également un plan de référence parallèle au premier plan de coupe,
- avant la fin du premier convoyeur (4) et au moyen d'un second convoyeur (5), on saisit le bulbe en le pinçant et on l'achemine vers un premier moyen (2A) de coupe *pour couper les feuilles,*
- après la séparation des feuilles, on achemine le bulbe vers un second moyen (3A) de coupe positionné au niveau du second plan de coupe et
- lors du transit vers le dit deuxième moyen (3A) de coupe, on introduit le bulbe dans un moyen (7) dit de déplacement vertical qui applique sur le pied du bulbe une force dirigée vers le bas pour faire glisser le dit bulbe vers le bas *sans limitation du déplacement* et positionner le pied du bulbe au niveau du deuxième plan de coupe,
- seulement après sa sortie du moyen (7) de déplacement, on engage le bulbe dans le second moyen (3A) de coupe destiné à séparer la racine émergeant du pied du bulbe et
- le bulbe est ensuite évacué.

**2.** Procédé de parage de bulbes allongés selon la revendication 1 **caractérisé en ce qu'**avant d'atteindre le premier moyen de coupe, on saisit les feuilles et on accompagne le déplacement du bulbe.

**3.** Procédé de parage de bulbes allongés selon la revendication 1 ou 2 **caractérisée en ce qu'**on assiste la saisie des feuilles par des jets d'air ou d'eau et on oriente ainsi l'axe longitudinal du bulbe à la verticale.

**4.** Moyens pour la mise en oeuvre du procédé selon l'une quelconque des revendications 1 à 3 **caractérisé en ce que** les moyens comprennent :
- un premier convoyeur (4) conformé pour saisir les feuilles attachées au bulbe afin de basculer le bulbe pour que la racine soit dirigée vers le haut et placer le collet du bulbe dans un plan de référence parallèle au premier plan de coupe,
- un second convoyeur (5) pour saisir le bulbe encore porté par le premier convoyeur et le déplacer vers des moyens (2A, 3A) de coupe, sur le parcours dudit bulbe,
- un premier moyen (2A) de coupe destiné à séparer les feuilles du bulbe,
- en aval de ce premier moyen de coupe, au dessus du second convoyeur (5) et en amont d'un deuxième moyen (3A) de coupe destiné à la séparation de la racine, un moyen (7) de déplacement vertical du pied du bulbe dans un plan confondu avec le plan de coupe du deuxième moyen de coupe, par application d'une force sur le pied du bulbe *sans butée limitant le déplacement du bulbe vers le bas,*
- en aval du moyen (7) de déplacement, le dit second moyen (3A) de coupe destiné à séparer la racine émergeant du pied du bulbe et
- un moyen d'évacuation du bulbe.

**5.** Moyens selon la revendication 4 **caractérisés en ce que** le premier convoyeur (4) est constitué par une vis (4A) sans fin coopérant avec un plan (4B) incliné parallèle à la vis pour former une lumière (4C) au travers de laquelle s'insèrent les feuilles.

**6.** Moyens selon la revendication 4 **caractérisés en ce que** le premier convoyeur (4) est constitué par deux vis sans fin disposées pour former une lumière.

**7.** Moyens selon la revendication 4 ou 5 ou 6 **caractérisés en ce que** le deuxième convoyeur est constitué de deux courroies (5A) sans fin délimitant un couloir, les dites courroies comportant une couche de mousse.

**8.** Moyens selon la revendication 4 ou 5 ou 6 ou 7 **caractérisés en ce que** le moyen de déplacement vertical comprend une seule courroie (7A) sans fin dite courroie de pression placée au dessus de la trajectoire des bulbes et dont le brin actif se déplace à la même vitesse que les brins du deuxième convoyeur, le dit brin actif de cette courroie sans fin (7A) étant incliné par rapport à l'axe de déplacement des bulbes et se rapprochant du pied du bulbe qu'il pousse vers le bas en progressant vers l'aval.

**9.** Moyens selon l'une quelconque des revendications 4 à 8 **caractérisé en ce qu'**il comprend un troisième convoyeur (10) formé par deux courroies en regard l'une de l'autre pince les feuilles avant que le bulbe atteigne le premier moyen de coupe et ne libère les dites feuilles qu'en aval du moyen de coupe précité.

**10.** Moyens selon l'une quelconque des revendications 4 à 6 **caractérisé en ce qu'**ils comprennent des jets d'eau et/ou d'air surplombant le premier convoyeur pour pousser les feuilles vers le bas.
